**Europäisches Patentamt**

**European Patent Office**

**Office européen des brevets**

(11) Veröffentlichungsnummer: **0 004 010**
**B1**

(12) **EUROPÄISCHE PATENTSCHRIFT**

(45) Veröffentlichungstag der Patentschrift: **10.02.82**

(51) Int. Cl.³: **H 04 N 7/12**

(21) Anmeldenummer: **79100559.8**

(22) Anmeldetag: **23.02.79**

(54) **System zur Übertragung einzelner Fernsehbilder.**

(30) Priorität: **28.02.78 DE 2808640**

(43) Veröffentlichungstag der Anmeldung:
**19.09.79 Patentblatt 79/19**

(45) Bekanntmachung des Hinweises auf die Patenterteilung:
**10.02.82 Patentblatt 82/6**

(84) Benannte Vertragsstaaten:
**BE CH FR GB IT LU NL SE**

(56) Entgegenhaltungen:
**DE - A - 1 956 843**
**DE - A - 2 551 664**
**DE - B - 2 346 735**
**FR - A - 2 177 904**
**US - A - 3 941 921**

**Computers and Graphics, Vol. 1, 1975, Oxford,
GB, R. L. Schiffman, T. E. McCracken et al.: "An
economical tonal display for interactive graphics
and image analysis date", Seiten 79—94.**

(73) Patentinhaber: **SIEMENS AKTIENGESELLSCHAFT**
**Berlin und München**
**Postfach 22 02 61**
**D-8000 München 22 (DE)**

(72) Erfinder: **Starck, Alexander, Dipl.-Phys.**
**Isartalstrasse 81**
**D-8000 München 70 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

System zur Übertragung einzelner Fernsehbilder

Die Erfindung bezieht sich auf ein System zur Übertragung einzelner stehender oder sich während der Aufnahme bewegender Bilder mit einer Fernsehkamera, mit einem ersten Analog-Digital-Umsetzer, mit einem digitalen Sender-Bildwiderholspeicher für den Fall der Übertragung nicht wenigstens näherungsweise stehender Bilder, mit einem Sender-Pufferspeicher, mit einem entweder digitalen oder durch einen ersten Digital-Analog-Umsetzer und einen zweiten Analog-Digital-Umsetzer begrenzten analogen Übertragungskanal, mit einem digitalen Empfänger-Bildwiderholspeicher, mit einem Empfänger-Pufferspeicher, mit einem zweiten Digital-Analog-Umsetzer und mit einem Fernsehempfänger.

Ein derartiges System ist aus der DE-AS 23 46 735 bekannt. Es enthält als Bildwiderholspeicher einen Drehspeicher, wie einen Magnetplattenspeicher und als Pufferspeicher wenigstens einen Unterspeicher zum Speichern eines wenigstens einer Bildzeile ent-sprechenden Bildzeilensignals. Bei Ver-wendung nur eines Unterspeichers treten im Signalfluß Unterbrechungen auf, weil die information nur entweder eingespeichert oder ausgelesen werden kann. Bei Anordnungen mit mehreren Unterspeichern sind viele Speicher-plätze erforderlich. Die Anzahl der Unterspeicher wird entsprechend dem Verhältnis der Breitbandfrequenz zur Schmalbandfrequenz gewählt.

Die Einfügung der Bildspeicher ermöglicht eine relativ lang same Übertragung mit beispielsweise 64 kbit/s über ein preiswertes Über-tragungsmedium. Anwender sind beispiels-weise Banken, die Bilder von Scheckformularen aus Filialen in die Zentrale übertragen, oder die Polizei, di Paßfotos oder Fingerabdrücke von Außenstellen zu einer Zentrale überträgt.

Derartige Systeme sind bereits auf dem Markt. Sie sind jedoch teuer, weil als Bildspeicher schnelle Schreib-Lese-Speicher vom Typ RAM (Random Access Memory) verwendet sind. Bei diesen ist jede Speicherstelle adressierbar, d.h. es wird jeweils die Speicherstelle geschrieben, gelöscht oder gelesen, deren zugehörige Adresse an den Adresseneingängen des Bausteins anliegt.

Mit RAM-Speichern hinreichender Größe läßt sich die Bildübertragung einfach realisieren, in dem das Video-signal zuerst nach bekannten Verfahren analog-digital umgesetzt und dann mit der Abtastfrequenz eine Bildperiode lang in den Speicher geschrieben wird. Mit einer der Übertragungsrate entsprechenden Frequenz werden dann die Speicherplätze gelesen und der Inhalt nach entsprechender digitaler Verarbeitung oder Digital-Analog-Umsetzung über die Übertragungsstrecke an den Empfänger übertragen. Dieser schreibt ihn entsprechend langsam in seinen Bildspeicher ein und liest ihn dann, solange es gewünscht wird, periodisch mit der Abtastfrequenz aus. Nach der Digital-Analog-Umsetzung kann er dann auf dem Fernsehempfänger widergegeben werden.

Aufgabe der Erfindung ist es, für ein derartiges System eine preisgünstigere Lösung anzugeben.

Ausgehend von einem System der einleitend geschilderten Art wird diese Aufgabe erfindungsgemäß dadurch gelöst, daß als Sender - Bildwiederholspeicher und also Empfänger-Bildwiederholspeicher CCD-(Charge-Coupled - Device -)Bildwiederholspeicher vorgesehen sind, daß als Sender-Pufferspeicher ein erstes Register, dessen Eingänge als Eingänge des Sender-Pufferspeichers dienen, ein erster Speicher, dessen Eingänge mit den Ausgängen des ersten Registers verbunden sind, ein zweites Register, dessen Eingänge mit den Ausgängen des ersten Speichers verbunden sind und dessen Ausgänge als Ausgänge des Sender-Puffer-speichers dienen, ein erster Vielfachum-schalter, dessen Ausgänge mit Adressenein-gängen des ersten Speichers verbunden sind, eine erste Vielfachumschalter-Steuerung, deren Ausgang mit einem Steuereingang des ersten Vielfachumschalters verbunden ist, ein erster Zähler, dessen Rücksetzeingang als Bild-impulseingang dient und dessen Datenaus-gänge mit ersten Eingängen des ersten Vielfachumschalters verbunden sind, ein zweiter Zähler, dessen Ausgänge mit zweiten Eingängen des ersten Vielfachumschalters verbunden sind, ein drittes Register, dessen Eingänge mit Datenausgängen des ersten Zählers verbunden sind, ein Vergleicher, dessen erste Eingänge mit den Eingängen des dritten Registers und dessen zweite Eingänge mit den Ausgängen des dritten Registers verbunden sind, ein dritter Zähler, dessen Überlaufausgang mit einem Takteingang des dritten Registers verbunden ist, ein erster Phasenschieber, dessen Eingang mit dem Ausgang eines zweiten Taktgenerators und dessen Ausgang mit einem Lesetakteingang des ersten Speichers, mit einem Takteingang des zweiten Registers, einem Takteingang des zweiten Zählers und einem Rückwärtstakteingang des dritten Zählers verbunden sind, ein Schalter, dessen Setzeingang mit einem Ausgang des Vergleichers und dessen Ausgang mit einem Schreibtakteingang des ersten Speichers und einem Vorwärtstakteingang des dritten Zählers verbunden ist, dessen Überlaufausgang mit einem Rücksetzeingang des Schalters verbunden ist, und ein erster Taktgenerator vorgesehen sind, dessen Ausgang mit dem Takteingang des ersten Registers, mit dem Eingang der ersten Vielfachumschalter-Steuerung, mit einem Takteingang des ersten Zählers, mit einem Takteingang des ersten Phasenschiebers und mit einem Eingang des Schalters verbunden ist, und daß ferner als Empfänger-Pufferspeicher ein viertes Register, dessen Eingänge als Eingänge des Empfänger-Pufferspeichers dienen, ein zweiter Speicher, dessen Eingänge mit Ausgängen des vierten Registers verbunden sind, ein fünftes Register, dessen Eingänge mit Ausgängen des zweiten Speichers verbunden sind und dessen Ausgänge als Ausgänge des Empfänger-Pufferspeichers dienen, ein zweiter Vielfachumschalter, dessen Ausgänge mit Adresseneingängen des zweiten Speichers verbunden sind, eine zweite Vielfachumschalter-Steuerung, deren Ausgang mit dem Steuereingang des zweiten Vielfachumschalters verbunden ist, ein vierter Zähler dessen Rücksetzeingang als Bildimpulseingang dient und dessen Datenausgänge mit ersten Eingängen des zweiten Vielfachumschalters verbunden sind, ein fünfter Zähler, dessen Datenausgänge mit zweiten Eingängen des zweiten Vielfachumschalters verbunden sind, ein sechstes Register, dessen Dateneingänge mit den Datenausgängen des vierten Zählers verbunden sind, ein zweiter Vergleicher, dessen erste Eingänge mit den Dateneingängen des sechsten Registers und dessen zweite Eingänge mit den Datenausgängen des sechsten Registers verbunden sind, ein sechster Zähler, dessen Überlaufausgang mit dem Takteingang des sechsten Registers verbunden ist, ein zweiter Phasenschieber, dessen Eingang mit einem Ausgang eines vierten Taktgenerators und dessen Ausgang mit einem Schreibtakteingang des zweiten Speichers, einem Takteingang des vierten Registers dem Eingang des fünften Zählers und einem Rückwärtstakteingang des sechsten Zählers verbunden sind, ein zweiter Schalter, dessen Setzeingang mit einem Ausgang des zweiten Vergleichers, dessen Ausgang mit dem Lesetakteingang des zweiten Speichers mit einem Bildspeicherausgang, mit einem Takteingang des fünften Schieberegisters und mit dem Vorwärtstakteingang des sechsten Zählers verbunden ist, dessen Überlaufausgang mit dem Rücksetzeingang des Schalters verbunden ist, und ein dritter Taktgenerator vorgesehen sind, dessen Ausgang mit einem Eingang der zweiten Vielfachumschaltersteuerung, mit einem Takteingang des vierten Zählers mit einem Takteingang des zweiten Phasenschiebers und mit dem Eingang des zweiten Schalters verbunden ist.

CCD-Speicher können preisgünstiger als RAM-Speicher hergestellt werden. Durch die dynamische Struktur der CCD-Speicher läßt sich der Speicherinhalt jedoch nicht beliebig langsam auslesen. Der Speicher kann aber derart dimensioniert werden, daß er den Datenfluß eines Bildes mit der gleichen Geschwindigkeit von beispielsweise 8 MHz einliest oder periodisch mit der Bildperiode ausliest. Zwischen den Bildwiederholspeichern und dem Übertragungskanal ist dann jedoch eine Pufferung erforderlich.

Die erfindungsgemäße Lösung arbeitet mit Pufferspeichern, die eine wesentlich geringere Anzahl von Speicherplätzen als die beim bekannten System benötigten.

Ein Empfängerpufferspeicher mit Flimmerunterdrückung ergibt sich in vorteilhafter Weise, wenn ein siebtes Register vorgesehen ist, das den Dateneingängen des sechsten Registers vorgeschaltet ist und dessen Takteingang dem Überlaufausgang des sechsten Zählers verbunden ist, wenn erste Eingänge des zweiten Vergleichers nur mit den Dateneingängen des siebten Registers verbunden sind, wenn der Takteingang des sechsten Registers mit einem Rücksetzeingang des vierten Zählers verbunden ist, wenn ein siebter Zähler vorgesehen ist, dessen Takteingang mit dem Ausgang des dritten Taktgenerators, dessen Ausgang mit einem zweiten Rücksetzeingang des vierten Zählers, dessen einer Rücksetzeingang mit einem Ausgang für eine definierte Zahl des fünften Zählers und dessen anderer Rücksetzeingang mit dem einen Rücksetzeingang des vierten Zählers verbunden ist, wenn ein dritter Schalter vorgesehen ist, dessen Eingang mit dem Eingang des zweiten Schalters und dem Ausgang des dritten Taktgenerators verbunden ist, wenn ein ODER-Gatter vorgesehen ist, dessen einer Eingang und dessen Ausgang in die Verbindung zwischen dem zweiten Schalter und dem sechsten Zähler einerseits und dem Lesetakteingang des zweiten Speichers, das fünfte Register und den Bildspeicherausgang andererseits eingefügt sind und dessen anderer Eingang mit dem Ausgang des dritten Schalters verbunden ist, wenn ein dritter Umschalter vorgesehen ist, dessen Eingang mit dem Ausgang des zweiten Vergleichers, dessen erster Ausgang mit dem Setzeingang des zweiten Schalters, dessen zweiter Ausgang mit dem Setzeingang des dritten Schalters, dessen Steuereingang für den ersten Ausgang mit dem Takteingang des sechsten Registers und dessen Steuereingang für den zweiten Ausgang mit dem Ausgang des siebten Zählers verbunden sind, und wenn ein achter Zähler vorgesehen ist, dessen Vorwärtstakteingang mit dem Ausgang des zweiten Schalters, dessen Rückwärtstakteingang mit dem Ausgang des dritten Schalters und dessen Überlaufausgang mit dem Rücksetzeingang des dritten Schalters verbunden sind.

Zur Verringerung der Übertragungszeit kann ein nicht interessierendes Umfeld eines Aufnahmegegenstandes unterdrückt werden. Dazu ist es vorteilhaft, wenn als erster oder als vierter Zähler ein Bildpunktzähler, dessen Takteingang als Eingang des ersten oder vierten Zählers und dessen Rücksetzeingang als Bildimpulseingang des ersten oder vierten Zählers dienen, ein Zeilenzähler, dessen Takteingang mit dem Überlaufausgang des Bildpunktzählers und dessen Rücksetzeingang mit dem Rücksetzeingang des Bildpunktzählers verbunden sind, ein erster Lesespeicher, dessen Dateneingänge und den Datenausgängen des Bildpunktzählers verbunden sind, ein zweiter Lesespeicher, dessen Dateneingänge mit den Datenausgängen des Zeilenzählers verbunden sind und ein UND-Gatter vorgesehen sind, dessen erster Eingang mit dem Ausgang des ersten Lesespeichers, dessen zweiter Eingang mit dem Ausgang des zweiten Lesespeichers und dessen dritter Eingang mit dem Takteingang des Bildpunktzählers verbunden sind und dessen Ausgang als Ausgang des ersten oder vierten Zählers dient.

Sollen der Bildpunkte der Horizontal-Austastlücke nicht weiter verarbeitet werden, ist es vorteilhaft, wenn dem ersten Analog-Digital-Umsetzer eine Sender-Taktanpassungsstufe nachgeschaltet ist und wenn dem zweiten Digital-Analog-Umsetzer eine Empfänger-Taktanpassungsstufe vorgeschaltet ist.

Um Speicherplätze und Übertragungszeit zu sparen, ist eine Redundanz- und Irrelevanzreduktion vorteilhaft, indem dem Sender-Bildwiederholspeicher ein PCM-DPCM-Umsetzer zum Umsetzen von Pulscodemodulation in Differenzpulscodemodulation vorgeschaltet ist und dem Empfänger-Bildwiderholspeicher ein DPCM-PCM-Umsetzer nachgeschaltet ist.

Eine weiter Redundanzreduktion läßt sich erreichen, wenn dem ersten Sender-Pufferspeicher ein Wahrscheinlichkeitscodierer nachgeschaltet ist und wenn dem Empfänger-Pufferspeicher ein Wahrscheinlichkeitsdecodierer vorgeschaltet ist.

Für die Einfügung eines Startsynchronwortes, für eine fehlerkorrigierende Codierung oder für eine Verwürfelung ist es vorteilhaft, wenn dem Eingang des Übertragungskanals ein Kanalcodierer vorgeschaltet ist und wenn dem Ausgang des Übertragungskanal ein Kanalcodierer nachgeschaltet ist.

Anhand von Ausführungsbeispielen wird die Erfindung nachstehend erläutert.

Fig. 1 zeigt ein erfindungsgemäßes Übertragungssystem,

Fig. 2 zeigt einen in das Übertragungssystem nach Fig. 1 einfügbaren analogen Übertragungskanal,

Fig. 3 zeigt einen erfindungsgemäßen Sender-Pufferspeicher,

Fig. 4 zeigt ein Taktschema zum Sender-Pufferspeicher nach Fig. 3,

Fig. 5 zeigt einen erfindungsgemäßen Empfänger-Pufferspeicher,

Fig. 6 zeigt ein Taktschema zum Empfänger-Pufferspeicher nach Fig. 5,

Fig. 7 zeigt einen erfindungsgemäßen Empfänger-Pufferspeicher mit Flimmerunterdrückung,

Fig. 8 zeigt ein Taktschema zum Empfänger-Pufferspeicher mit Flimmerunterdrückung nach Fig. 7,

Fig. 9 zeigt einen Ersatz für den ersten Zähler bei sende- und empfangsseitiger programmierter Unterdrückung, und

Fig. 10 zeigt eine Ausgestaltung des erfindungsgemäßen Systems.

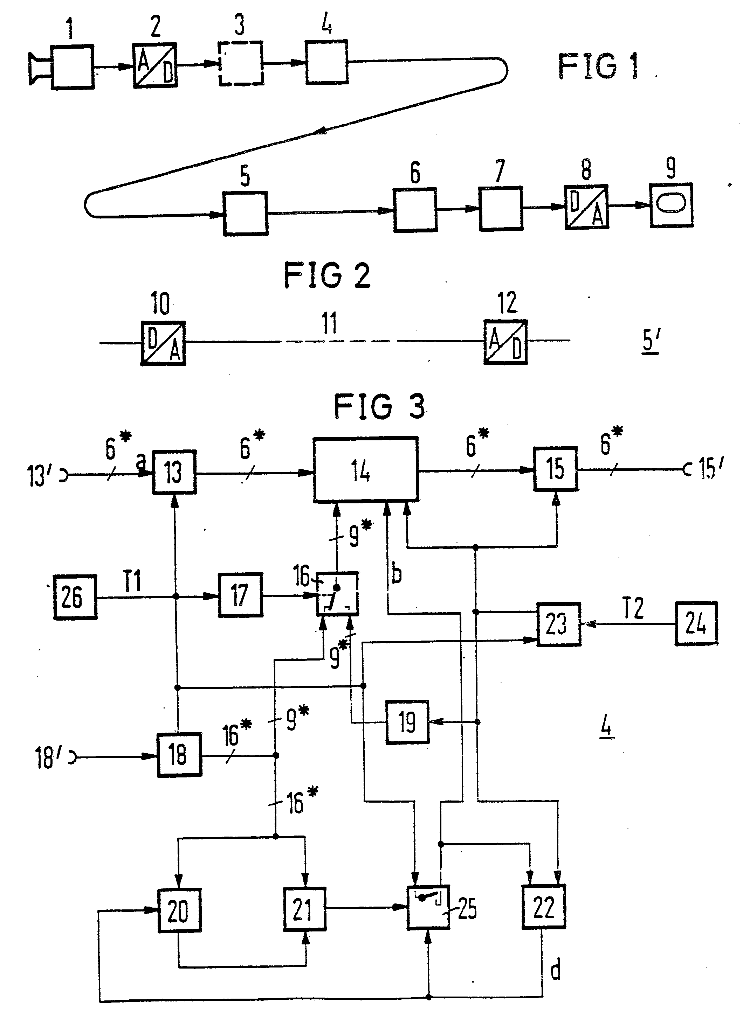

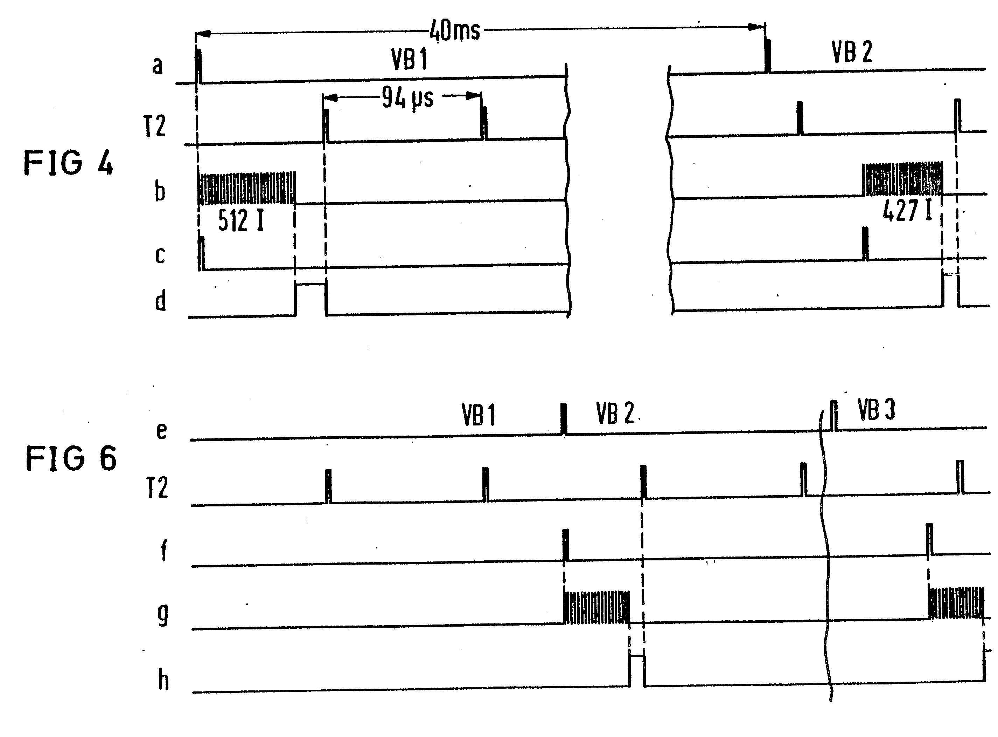

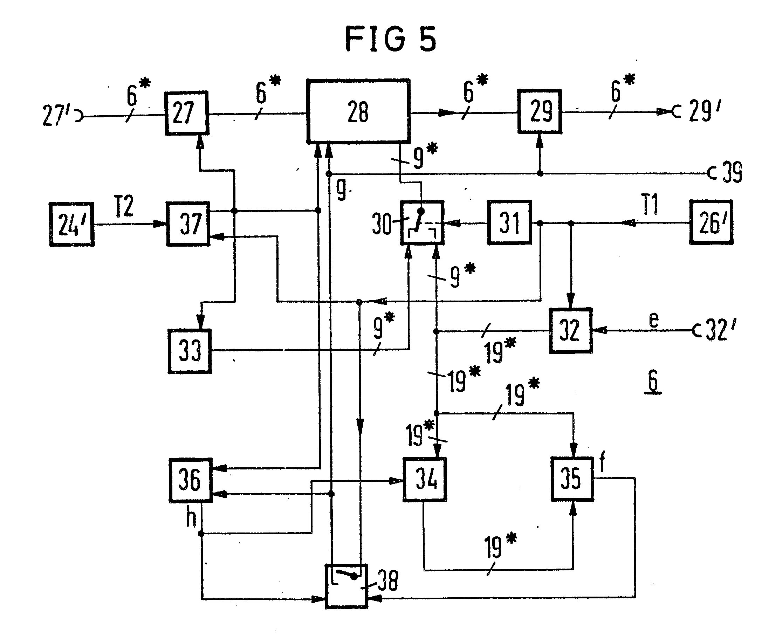

Fig. 1 zeigt ein erfindungsgemäßes Übertragungssystem. Es enthält eine Fernsehkamera 1, einen Analog-Digital-Umsetzer 2, einen Sender-Bildwiederholspeicher 3, einen Sender-Pufferspeicher 4, einen Übertragungskanal 5, einen Empfänger-Pufferspeicher 6, einem Empfänger - Bildwiederholspeicher 7 einen Digital - Analog - Umsetzer 8 und einen Fernsehempfänger 9. Der Sender - Puffer - speicher 4 wird in den Fig. 3 und 4 und der Empfänger-Pufferspeicher 6 wird in den Fig. 5 bis 8 später näher erläutert.

Die Fernsehkamera 1 nimmt ein Bild mit 320 000 Bildpunkten auf, die der Analog-Digital-Umsetzer in eine entsprechende Anzahl von Codewörtern umsetzt. Diese werden in den Sender-Bildwiederholspeicher 3 eingespeist und periodisch wieder ausgelesen. Jeweils mehrere in dichter Folge auftretende Codewörter werden in den Sender-Pufferspeicher 4 eingespeist und zwar derart, daß vom ersten ausgelesenen Vollbild Codewörter der Bildpunkte 1 bis 512, vom zweiten Vollbild Codewörter der Bildpunkte 513 bis 941 usw. ausgewählt werden und in dünner Folge auf den Übertragungskanal 5 abgegeben, und zwar derart, daß die zu Impulspaketen zusammengefaßten Codewörter kontinuierlich übertragen werden. Der Empfangs-Pufferspeicher 6 bewirkt die Rückumsetzung im Impulspakete, die im richtigen Moment dem Empfänger-Bildwiederholspeicher 7 zugeführt werden, der sie sammelt und periodisch so über den Digital-Analog-Umsetzer 8 abgibt, daß sie auf dem Fernsehempfänger 9 wieder ein vollständiges Bild ergeben.

Fig. 2 zeigt einen Übertragungskanal 5', der aus einem Digital-Analog-Umsetzer 10, einer analogen Leitung 11 und einem Analog-Digital-Umsetzer 12 besteht. Damit kann das erfindungsgemäße Übertragungssystem auch über analoge Leitungen übertragen.

Fig. 3 zeigt einen erfindungsgemäßen Sender-Pufferspeicher 4 und Fig. 4 zeigt ein zugehöriges Taktschema.

Der Sender-Pufferspeicher 4 enthält Register 13, 15 und 20, einen Speicher 14, einen Vielfachumschalter 16, eine Vielfachumschalter-Steuerung 17, Geradeauszähler 18 und 19, einen Vorwärts-Rückwärtszähler 22, einen Phasenschieber 23, Taktgeneratoren 24 und 26, einen digitalen Vergleicher 21, einen Schalter 25, einen Eingang 13', einen Ausgang 15' und einen Rücksetzeingang 18'.

Die mit einem 1 MHz-Takt T1 am Eingang 13' über sechs parallele Leitungen ankommenden Bildpunkte werden in das Register 13 übernommen. (Einen Zahl mit * bedeutet die Anzahl paralleler Leitungen). Am Anfang eines jedes Vollbildes wird der Zähler 18 durch die Bildimpulse auf Null gesetzt. Anschließend zählt er die in das Register 13 eingespeisten Bildpunkte. Sein Zählerstand stellt immer die Nummer des im Register 13 gespeicherten Bildpunktes dar. Der Zähler 18 muß so dimensioniert sein, daß er die Gesamtzahl der Bildpunkte eines Vollbildes erreichen kann. Bei einem 8 MHz-Takt und fünfundzwanzig Bildern pro Sekunde beträgt die Gesamtzahl 320 000. Dies bedeutet, daß der Zähler 18 neunzehn Teilerstufen benötigt.

Die Bildpunkte werden vom Register 13 über sechs parallele Leitungen in den Speicher 14 eingelesen. Bei einer Übertragung mit 64 kbit und sechs Bit pro Codewörter sind im Speicher 14 mindestens 428 Speicherplätze erforderlich. In der Praxis wird man 512 Bildpunkte als Speichergröße wählen. Dies bedeutet, daß der Speicher 14 neun Adresseneingänge aufweisen muß.

Der Vielfachumschalter 16 wird mit dem aus dem Generator 26 stammenden Takt T1 über die Vielfachumschalter-Steuerung 17 so hin und her geschaltet, daß er während der ersten Hälfte einer Taktperiode eine solche Lage hat, daß die letzten neun Bits an den Datenausgängen des Zählers 18 an die Adresseneingänge des Speichers 14 gelegt werden, während in der anderen Lage neun Bits von den Datenausgängen des Zählers 19 über parallele Leitungen an die Adresseneingänge des Speichers 14 geführt werden. Der unter Verwendung eines Flipflops aufgebaute Schalter 25 schaltet den Takt T1 als Schreibbefehl an den Schreibtakteingang des Speichers 14. Beim Beginn der Übertragung ist der Schalter 25 geschlossen und es werden die ankommenden Bildpunkte des ersten Vollbildes der Reihe nach in den Speicher 14 eingeschrieben. Mit den Schreibbefehlen wird der Zähler 22 hochgezählt. Wenn er den Stand 512 erreicht, was die Füllung des Speichers 14 bedeutet, öffnet er den Schalter 25. Gleichzeitig wird der Stand des Zählers 18, also die Nummer des zuletzt eingelesenen Bildpunktes im Register 20 gespeichert.

Der Taktgenerator 24 liefert einen 10 kHz-Takt T2, mit dem die Bildpunkte aus dem Sender-Pufferspeicher 4 abgerufen werden können. Der Takt T2, der asynchron sein kann, wird mit dem Phasenschieber 23 derart verschoben, daß die daraus abgeleiteten Ausleseimpulse in die Hälfte der Taktperiode fallen, in der der Vielfachumschalter 16 den Zählerstand des Zählers 19 als Adressen an den Speicher 14 legt. Der ausgelesene Bildpunkt wird im Register 15 gespeichert und kann von dort bis zum nächsten Taktimpuls T2 übernommen werden. Mit den Ausleseimpulsen wird auch der Zähler 19 hoch- und der Zähler 22 hinuntergezählt. Dadurch ist sichergestellt, daß die Bildpunkte in derselben Reihenfolge aus dem Speicher 14 ausgelesen werden, in der sie eingeschrieben wurden. Durch die Dimensionierung ist sichergestellt, daß die ersten Speicherplätze des Speichers 14 schon wieder neu beschrieben worden sind, wenn aus den letzten gelesen wird.

Aus dem ersten Vollbild waren die Bildpunkte (1) bis 512 in den Speicher 14 gelesen worden und die Zahl 512 wurde im Register 20 gespeichert. Wenn im zweiten Vollbild der Bildpunkt 512 anliegt, stellt der digitale Vergleicher 21 Gleichheit zwischen den Ausgangswerten am Zähler 18 und am Register 20 fest und schließt den Schalter 25. Da inzwischen auch durch das Auslesen des Zählers 22 dieser nicht mehr auf dem Wert 512 steht, und der Bildpunkt 513 in den ersten Speicherplatz des Speichers 14 geschrieben wurde (die letzten neun Bits von 513 sind identisch mit denen von (1), der Punkt 514 auf den zweiten Speicherplatz geschrieben wurde usw. bis alle inzwischen ausgelesenen Speicherplätze wieder beschrieben wurden und der Zähler 22 wieder die Zahl 512 erreicht hat. So werden nach und nach sämtliche Bildpunkte des Bildes, das periodisch am Eingang 13' anliegt, am Ausgang 15' abgegeben.

Im Taktschema nach Fig. 4 bedeuten a die Bildimpulse, b die Schreibimpulse, c das Vergleicherausgangssignal und d das Überlaufsignal des Zählers 22. VB1 bedeutet erstes Vollbild, VB2 bedeutet zweites Vollbild und I bedeutet Impulse.

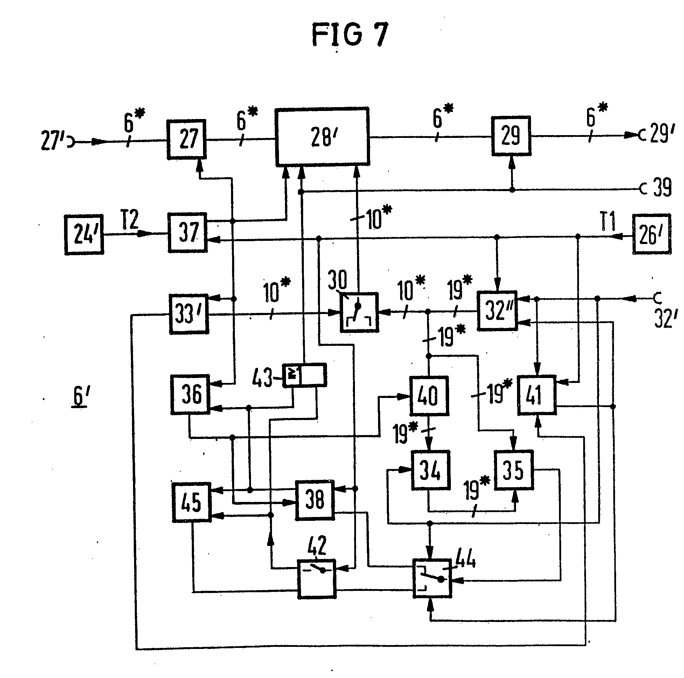

Fig. 5 zeigt den erfindungsgemäßen Empfänger-Pufferspeicher 6 und Fig. 6 zeigt ein zugehöriges Taktschema.

Der Empfänger-Pufferspeicher 6 enthält Register 27, 29 und 34, einen Speicher 28, einen Vielfachumschalter 30, eine Vielfachumschalter-Steuerung 31, Taktgeneratoren 24' und 26', einen Phasenschieber 37, Vorwärtszähler 32 und 33, einen Vorwärts-Rückwärtszähler 36, einen digitalen Vergleicher 35, einen Schalter 38, einen Eingang 27', einen Ausgang 29' und einen Rücksetzeingang 32'.

Der Aufbau des Empfänger-Pufferspeichers 6 ähnelt dem des bereits beschriebenen Sender-Pufferspeichers 4. Die mit dem langsamen Takt T2 ankommenden Bildpunkte werden mit dem in Phasenschieber 37 an den schnellen Takt angepaßt und nach Zwischenübernahme in das Register 27 in den Speicher 28 geschrieben. Gleichzeitig wird der Zähler 36, der den Speicherinhalt kontrolliert, hochgezählt, wenn beim nächsten Vollbildbeginn der Schalter 38 geschlossen wird, da am Anfang im Register 34 eine Null steht, der Vergleicher 35 anspricht und der Zähler 36 nicht mehr auf Null steht. Es werden nun aus dem Speicher 28 so viele Bildpunkte ausgelesen und nach Zwischenspeicherung in dem Register 29 in den Bildwiederholspeicher 7 geschrieben, bis der Speicher 28 leer ist. Dies wird dadurch angezeigt, daß der Zähler 36, der beim Auslesen abwärts zählte, den Wert Null erreicht.

Da der Empfänger-Bildwiederholspeicher 7 mit dem Takt T1 umläuft und bei jedem Bildimpuls ein neuer Umlauf beginnt, entspricht der Zählerstand des Zählers 32 jeweils dem Bildspeicherplatz, an dem ein Bildpunkt eingeschrieben werden kann. Auf diese Weise werden die der Reihe nach ankommenden Bild- punkte von (1) bis (320 000) in derselben Reihenfolge in den Bildspeicher geschrieben.

Fig. 6 zeigt ein Taktschema zum Empfänger- Pufferspeicher 6. e bedeutet Bildimpulse, f bedeutet das Vergleicherausgangssignal, g Ausleseimpulse, h bedeutet einen Impuls, den der Zähler 36 abgibt, wenn er den Nullwert erreicht hat. VB1 bis VB3 bedeuten Vollbilder 1 bis 3.

Fig. 7 zeigt einen Empfänger-Pufferspeicher 6' mit Flimmerunterdrückung, der benfalls in die Anordnung nach Fig. 1 eingesetzt werden kann. Die Anordnung enthält neben den bereits in Fig. 5 dargestellten Elementen ein weiteres Register 40, zwei weitere Zähler 41 und 45, einen weiteren Schalter 42, ein ODER-Gatter 43 und einen Umschalter 44.

Wenn während der Übertragung der Inhalt des Empfangs-Bildwiederholspeichers 7 laufend auf dem Fernsehempfänger 9 dargestellt wird und die Übertragung derart erfolgt, daß zuerst das eine Halbbild mit ungeraden Zeilen und dann das andere Halbbild mit den geraden Zeilen übertragen wird, tritt ein Effekt auf, der stark störend wirken kann. Bildteile, bei denen erst ein Halbbild übertragen worden ist, werden auf dem Fernsehempfänger 9 nur mit 25 Hz wiedergegeben und scheinen deswegen stark zu flackern. Eine Möglichkeit, dies zu unterdrücken, besteht darin, daß man das ankommende erste Halbbild gleich zweimal in den Bildspeicher schreibt, und zwar dorthin, wo es sowieso geschrieben werden muß und dorthin, wohin später das zweite Halbbild geschrieben werden muß. Wenn das zweite Halbbild übertragen wird, überschreibt es das an seiner Stelle stehende erste Halbbild. Dadurch wird das Bild von Anfang an flackerfrei wiedergegeben. Durch die Übertragung des zweiten Halbbildes wird lediglich die vertikale Auflösung verdoppelt.

Hierfür muß der Empfänger-Pufferspeicher 6' etwas komplizierter werden, wie es in Fig. 7 dargestellt ist. Der Speicher 28' muß größer sein als der Speicher 28 in der einfachen Version nach Fig. 5. Er muß soviele Bildpunkte speichernkönnen wie in 1,5 Vollbildperioden übertragen werden. Dies sind bei sechs Bits pro Bildpunkten und 64 kbit 640 Bildpunkte.

Der Zähler 41 wird durch den Bildimpuls auf Null gesetzt und gibt einen Impuls nach dem Ende der 313 ten Zeile ab. Währenddessen hat der Zähler 33' noch nicht die gesamte Bildpunktzahl gezählt. Das erste Halbbild wird also noch übertragen. Weil bei Beendigung des Auslesens im ersten Halbbild die Startadresse des Auslesens noch benötigt wird, wird die Endadresse erst im Register 40 gespeichert und erst mit dem nächsten Vollbildimpuls vom Speicher 34 übernommen. Der Umschalter 44 schaltet das Ausgangssignal im ersten Halbbild auf den Schalter 38 und im zweiten Halbbild auf den Schalter 42. Das Auslesen im ersten Halbbild erfolgt genauso wie im einfachen Empfangs-Pufferspeicher 6. Der Zähler 45 zählt mit den Ausleseimpulsen aufwärts und hat zum Schluß die Zahl der gerade ausgelesenen Bildpunkt gespeichert. Im zweiten Halbbild fängt der Zähler 32' wieder von Null an zu zählen, da er vom Zähler 41 zurückgesetzt worden ist. Der Vergleicher 35 stellt dann noch einmal Gleichheit fest und schließt über den jetzt umgeschalteten Umschalter 44 den Schalter 42. Nun werden dieselben Speicherplätze des Speichers 28' nochmal ausgelesen. Der Zähler 45, der mit diesen Ausleseimpulsen abwärts zählt, sorgt dafür, daß im zweiten Halbbild dieselbe Anzahl von Bildpunkten ausgelesen wird wie im ersten Halbbild, indem er bei Erreichen von Null den Schalter 42 öffnet und so das zweite Auslesen beendet.

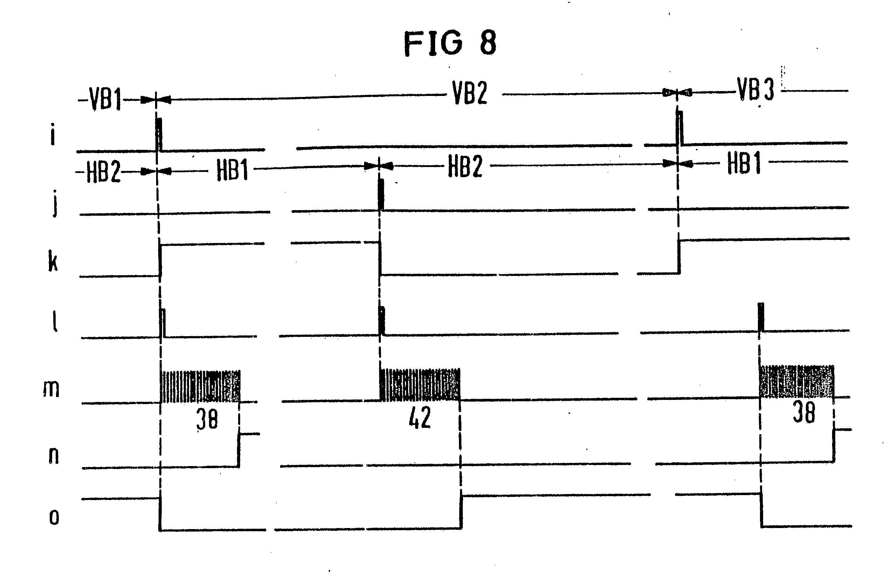

Fig. 8 zeigt ein Taktschema zum Empfänger- Pufferspeicher 6' nach Fig. 7. Im Schema bedeuten i Bildimpulse, j Halbbildimpulse des Zählers 41, k die Stellung des Umschalters 44, l Ausgangsimpulse des Vergleichers 35, m Ausleseimpulse, n ein Erreichen des Nullwertes durch den Zähler 36, o das Erreichen des Nullwertes durch den Zähler 45, VB1 bis VB3 ein erstes bis drittes Vollbild und HB1 und HB2 ein erstes und ein zweites Halbbild.

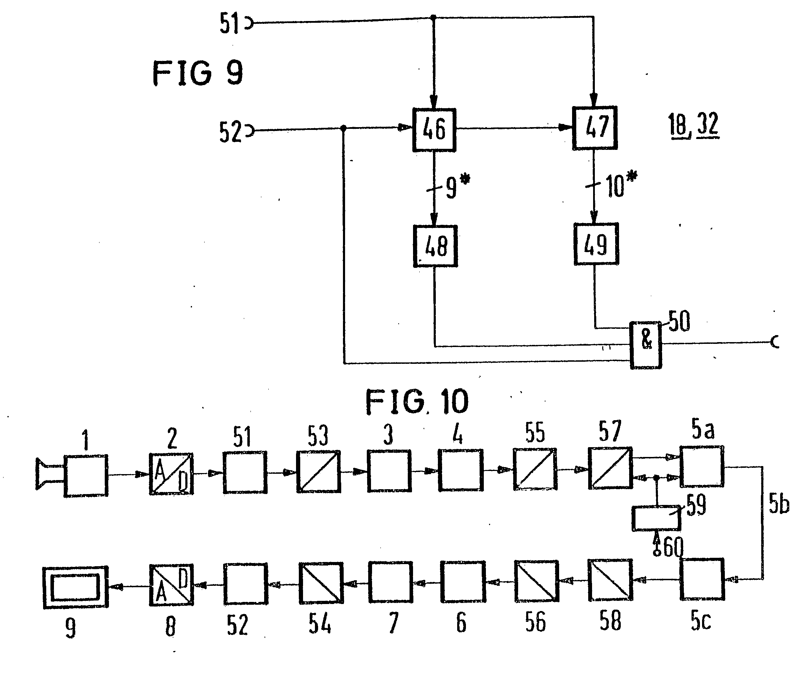

Fig. 9 zeigt eine Anordnung, die an die Stelle der Zähler 18, 32 oder 32' bei sende- oder empfangsseitiger Umfeld-Unterdrückung tritt. Die Anordnung enthält einen Bildpunktzähler 46, einen Zeilenzähler 47, zwei Lesespeicher 48 und 48 sowie ein UND-Gatter 50.

Beide Zähler 46 und 47 arbeiten, wenn am Eingang 51 der Bildimpuls, am Eingang 52 der Bildpunkttakt angelegt werden. Der Lese- speicher 48 gibt eine logische Eins ab für Bildpunkte, die innerhalb der Zeile übertragen werden sollen. Der Lesespeicher 49 gibt am Ausgang eine logische Eins ab für Zeilen, in denen etwas übertragen werden soll. Der Bildpunkttakt wird also durch das UND-Gatter 50 nur dann durchgelassen, wenn der entsprechende Bildpunkt übertragen werden soll.

Fig. 10 zeigt eine Ausgestaltung des erfindungsgemäßen Systems. Außer den in Fig. 1 dargestellten Elementen enthält die Anordnung eine. Sender-Taktanpassungsstufe 51, einen PCM-DPCM-Umsetzer 53, einen Wahr- scheinlichkeits-Codierer 55, einen Kanal- cordierer 57, eine Kanaldecodierer 58, einen Wahrscheinlichkeits-Decodierer 56, einen DPCM-PCM-Umsetzer 54, eine Empfänger-Tak- tanpassungsstufe 52 und einen Sendetakt- generator 59 mit externem Eingang 60.

Bein einem System, das zur Übertragung von Fernseh-Einzelbildern eingesetzt werden soll, wird eine möglichst kurze Übertragungszeit bei hoher räumlicher und befriedigender Gradationsauflösung gefordert. Eine Unterabtastung kommt nicht in Frage, weil insbesondere die horizontale Auflösung nicht vermindert werden darf.

Zur Redundanzreduktion eignet sich gut ein statistischer Code, weil die Anzahl der für eine Bildübertragung benötigten Bits und damit die Übertragungszeit von Bild zu Bild schwanken darf. Ein derartiger Code läßt sich gut mit einer Differenzpulscodemodulation (DPCM) kombinieren. Wenn im Bildspeicher das Bild DPCMcodiert gespeichert ist, kann das auch zur Kosteneinsparung beim Bildspeicher führen.

Wenn das Eingangssignal des System während der Bildübertragung von Bild zu Bild konstant ist, wird auf der Sendeseite kein Bildspeicher benötigt.

Die Fernsehkamera 1 gibt ein BAS-Signal (Bild-Austast-Synchron) der deutschen 625-Zeilennorm ab. Dieses Signal wird dem Analog-Digital-Umsetzer 2 zugeführt. Die Abtastfrequenz kann 8 MHz oder eine beliebige andere Abtastfrequenz bis zu 10 MHz betragen. Die Abtastfrequenz sowie die Frequenz 8 MHz also Systemtakt werden in der Taktsteuerung 61 aus der Zeilenfrequenz und diese zusammen in den Vertikalsynchronimpulsen aus dem Synchronsignalgemisch des BAS-Signals gewonnen.

Wenn die Abtastfrequenz nicht 8 MHz beträgt, wird in einer Taktanpassungsstufe 51 bei höheren Abtastfrequenzen der aktive Teil der Zeile expandiert, so daß Bildpunkte der Horizontalaustastlücke nicht weiter verarbeitet werden, oder er wird bei niedriger Abtastfrequenz entsprechend kompandiert und zusätzliche redundante Codeworte werden in die Austastlücke eingefügt. Eine mögliche Realisierung dieser Taktanpassungsstufe 51 ist mit Hilfe von zwei Zeilenspeichern möglich, wobei immer in einem Zeilenspeicher die gerade ankommende Zeit ein- und aus dem anderen die letzte Zeile ausgelesen wird. Man benötigt dabei zwei 512.8 Bit-Speicher. Weniger Speicher aber mehr Steueraufwand werden benötigt, wenn ein echter Pufferspeicherbetrieb gemacht wird. Es lassen sich auch schnelle integrierte digitale Pufferspeicher verwenden.

Als nächste Stufe folgt der PCM-DPCM-Umsetzer 53. Wenn eine 5 Bit- bzw. 4 Bit-DPCM verwendet wird, braucht der folgende Sende-Bildwiederholspeicher 3 auch nur für fünf bzw. vier Bits aufgebaut zu sein.

Als Speicherelemente für den Sende-Bildwiederholspeicher 3 können u. a. 16384 Bit- oder 65536 Bit-CCD-Speicher verwendet werden, die intern aus vielen Schieberegistern gleicher Länge bestehen.

Damit ein im Bildspeicher gespeichertes Bild periodisch ohne Unterbrechung ausgelesen werden kann, muß die Zahl der Bildpunkte ein ganzzahliges Vielfaches von 256 der Schieberegisterlänge sein. Weil die Zeilenzahl $625=5^4$ keinen gemeinsamen Teiler mit $256=2^8$ hat, muß, da alle Zeilen gleichviele Bildpunkte haben müssen, um ein Ausfransen von Kanten zu vermeiden, die Zahl der Bildpunkte pro Zeile ein Vielfaches von 256 sein. Es bieten sich 512 Bildpunkte an, was einer Abtastfrequenz von 8 MHz entspricht, wenn die 512 Bildpunkte über die ganze Zeile (64 $\mu$s) verteilt

werden, und einer Abtastfrequenz von 10 MHz, wenn die Bildpunkte über den aktiven Teil der Zeile verteilt werden (52 $\mu$s). Damit würde die 5 MHz-Auflösung des Bildes nicht beeinträchtigt werden. Es müssen also insgesamt $512.625=320\,000$ Bildpunkte pro Vollbild gespeichert werden.

Der Sender-Pufferspeicher 4 nimmt die eigentliche Geschwindigkeitsanpassung zwischen dem PCM- bzw. DPCM-Bilddatenfluß mit einer Wortrate von 8 MHz und den Ausgabetakt für die Strecke mit den Leitungsendgeräten 5a und 5c sowie der Leitung 5b vor. Weil zu einem bestimmten Bildteil im Sende-Bildwiederholspeicher 3 nur während jeder Vollbildperiode von 40 ms einmal zugegriffen werden kann, muß im Sende-Pufferspeicher 4 ein so großer Bildteil gespeichert werden können, wie in 40 ms übertragen werden kann. Werden beispielsweise ein 5 Bit-DPCMcodiertes Signal über 64 kbit/s-Leitung übertragen, so müssen mindestens

$$\frac{40.64}{5}=512$$

Bildpunkte gespeichert werden. Der tatsächliche Speicherbedarf ist noch etwas größer, weil die nächsten 512 Bildpunkte um 512 Takte später im Speicher stehen, also die Periode 64 $\mu$s länger ist als 40 ms, so daß mindestens 513 Bildpunkte gespeichert werden müssen. Bei 4 Bit-DPCM oder bei nachfolgender Optimalcodierung muß der Speicher entsprechend größer sein. Zu dem Speicher gehört eine Steuerung, die dafür sorgt, daß die einzelnen Bildpunkte am Pufferausgang nach Anforderung beliebig asynchron abgerufen werden können, die weiterhin dafür sorgt, daß neue Bildteile in die leer gewordenen Speicherplätze eingelesen werden.

Das beliebig asynchrone Auslesen des Sende-Pufferspeichers 4 ist notwendig, damit nach der möglichen Optimalcodierung, der möglichen Einfügung von Adressenwörtern, anderen Fehlerschutzmaßnahmen und der Parallel-Serien-Umsetzung ohne weiteren Pufferspeicher ein synchroner Datenfluß zustande kommt, dessen Takt völlig unabhängig vom Bildtakt bzw. dem Eingangssignal ist.

Übertragungszeit wird auch wesentlich durch Redundanzreduktion mittels eines Wahrscheinlichkeits-Codierers 55 eingespart. Dabei werden den DPCM-Codewörtern, die normalerweise alle mit gleicher Codewortlänge, beispielsweise 5 Bit, übertragen werden, Codewörtern mit unterschiedlichen Codewortlängen zugeordnet. Die häufig vorkommenden kleinen Differenzen werden mit kürzeren und die selten vorkommenden größeren Differenzen mit längeren Codewörtern übertragen, so daß die mittlere Codewortlänge wesentlich kleiner, beispielsweise 3 Bit, ist als die mittlere Codewortlänge, wenn alle Differenzen mit gleich langen Codewörtern übertragen werden. In dieser Stufe wird auch die Parallelserienumsetzung vorgenommen und evtl. Adressencodewörter oder Zeilensynchronwörter eingefügt. Im einfachsten Fall für reine n-Bit-PCM oder n-Bit-DPCM besteht diese Stufe nur aus einem n-Bit-Parallel-Serienumsetzer und einem Teiler durch n, der den abfragenden Takt durch n teilt und an den Pufferspeicher weitergibt.

In der letzten Stufe, dem Kanalcodierer 57, wird diesem Datenfluß ein Startsynchronwort zugefügt. Eine evtl. nötige fehlerkorrigierende Codierung wird auch hier vorgenommen. Wenn nötig, wird das Signal in dieser Stufe verwürfelt. Der Takt der Übertragungsstrecke kann extern zugeführt oder in einem eigenen Generator erzeugt werden.

Empfangsseitig ist ein Kanaldecodierer 58 vorgesehen, in den das Startsynchronwort detektiert, das Signal entwürfelt und, wenn es speziell codiert war, decodiert wird.

Anschließend folgt der Wahrscheinlichkeits-Decodierer 56, in dem der serielle Bitfluß in einen parallelen Bitfluß umgesetzt wird und dabei auch die unterschiedlich langen Codewörter der Optimalcodierung in Codewörter mit konstanter Länge umgesetzt werden. Evtl. eingefügte Teilsynchronwörter und Adressencodewörter werden in dieser Stufe detektiert.

Dieser Empfangs-Pufferspeicher 6 sammelt während einer Bildperiode die inzwischen ankommenden Bildpunkte und schreibt sie sobald wie möglich an die richtige Stelle in den nachfolgenden Empfangs-Bildwiederholspeicher 7.

Der Empfangs-Bildwiederholspeicher 7 entspricht dem Sende-Bildwiederholspeicher 3. Nach dem Empfänger-Bildwiederholspeicher 7 folgt der DPCM-PCM-Umsetzer 54, an dessen Ausgang nur mehr PCM-Codewörter zur Verfügung stehen. Die Taktanpassungsstufe 52 puffert vom 8 MHz-Systemtakt zeilenweise auf die Abtastfrequenz. Ihr folgt der Digital-Analog-Umsetzer 8, der die ankommenden PCM-Codewörter in ein analoges BA-Signal umsetzt und nach Zusatz der Synchronzeichen ein vollständiges normgerechtes BAS-Signal an den Fernsehempfänger 9 abgibt.

Als Taktgeber wird in der Taktsteuerung 62 ein freilaufender quarzstabiler Generator benutzt, der die Abtastfrequenz und den 8 MHz-Systemtakt erzeugt. Daraus werden auch die Bildsynchronimpulse abgeleitet, durch die der Empfänger-Pufferspeicher 6, der DPCM-PCM-Umsetzer 54 und die Taktanpassungsstufe 52 gesteuert werden und die als Synchronsignal nach dem Digital-Analog-Umsetzer 8 dem Bildsignal zugefügt werden. Der Empfänger muß nicht synchron zum Sender laufen. Prinzipiell sind hier, um ein ruhigeres Bild zu erhalten, höhere Vollbildfrequenzen als 25 Hz möglich.

Eine Erweiterung des Systems auf Farbübertragung ist möglich. Dabei muß das Fernsehsignal getrennt in Luminanz- und Chrominanzsignale vorliegen, weil bei einem FBAS-Signal (Farbe-Bild-Austast-Synchron) der Farbträger in jedem Vollbild eine andere Phasenlage hat. Das kann man durch Matrizierung und Filterung eines RGB-Signals (rot-grün-blau) oder durch Demodulation des FBAS-Signals erhalten. Die beiden Chrominanzsignale können beide gleichzeitig jedes für sich abgetastet und analog-digital umgesetzt werden oder zeilensequentiell mit einem Analog-Digital-Umsetzer. Bei geringen Qualitätsansprüchen, wenn für die Luminanz 8 MHz und für die Chrominanz 1,6 MHz Abtastfrequenz ausreichen, lassen sich die Chrominanzzeilen sequentiell in den Horizontalaustaslücken des Luminanzsignals unterbringen. Das kann in einer besonderen Sender-Taktanpassungsstufe geschehen. Die übrigen Module brauche nicht abgeändert zu werden. Werden, dagegen höhere Abtastfrequenzen benötigt, beispielsweise 10 MHz für die Luminanz und 5 MHz für die Chrominanz, so müssen die Chrominanzsignale parallel zur Luminanz verarbeitet werden und alle Module auf etwas breitere Datenpfade eingerichtet sein. In dem PCM-DPCM-Umsetzer 53 und in dem Wahrscheinlichkeits-Codierer 55 muß die Chrominanz und Luminanz getrennt bearbeitet werden.

**Patentansprüche**

1. System zur Übertragung einzelner stehender oder sich während der Aufnahme bewegender Bilder mit einer Fernsehkamera (1), mit einem ersten Analog-Digital-Umsetzer (2), mit einem digitalen Sender-Bildwiederholspeicher (3) für den Fall der Übertragung nicht wenigstens näherungsweise stehender Bilder, mit einem Sender-Pufferspeicher (4), mit einem entweder digitalen oder durch einen ersten Digital-Analog-Umsetzer und einen zweiten Analog-Digital-Umsetzer begrenzten analogen Übertragungskanal, mit einem digitalen Empfänger-Bildwiederholspeicher (7), mit einem Empfänger-Pufferspeicher (6), mit einem zweiten Digital-Analog-Umsetzer (8) und mit einem Fernsehempfänger (9), dadurch gekennzeichnet, daß als Sender-Bildwiederholspeicher (7) und als Empfänger-Bildwiederholspeicher CCD-(Charge-Coupled-Device) Bildwiederholspeicher vorgesehen sind, daß als Sender-Pufferspeicher (4) ein erstes Register (13), dessen Eingänge als Eingänge des Sender-Pufferspeichers (4) dienen, ein erster Speicher (14), dessen Eingänge mit den Ausgängen des ersten Registers (13) verbunden sind, ein zweites Register (15), dessen Eingänge mit den Ausgängen des ersten Speichers (14) verbunden sind und dessen Ausgänge als Ausgänge des Sender-Pufferspeichers (4) dienen, ein erster Vielfachumschalter (16), dessen Ausgänge mit Adresseneingängen des ersten Speichers (14) verbunden sind, eine erste Vielfachumschalter-Steuerung (17), deren Ausgang mit einem Steuereingang des ersten Vielfachumschalters (16) verbunden ist, ein erster Zähler (18), dessen Rücksetzeingang als Bildimpulseingang dient und dessen Datenausgänge mit ersten Eingängen des ersten Vielfachumschalters (16) verbunden sind, ein zweiter Zähler (19), dessen Ausgänge mit zweiten Eingängen des ersten Vielfachumschalters (16) verbunden sind, ein drittes Register (20), dessen Eingänge mit Datenausgängen des ersten Zählers (18) verbunden sind, ein Vergleicher (21), dessen erste Eingänge mit den Eingängen des dritten Registers (20) und dessen zweite Eingänge mit den Ausgängen des dritten Registers (20) verbunden sind, ein dritter Zähler (22), dessen Überlaufausgang mit einem Takteingang des dritten Registers (20) verbunden ist, ein erster Phasenschieber (23), dessen Eingang mit dem Ausgang eines zweiten Taktgenerators (24) und dessen Ausgang mit einem Lesetakteingang des ersten Speichers (14), mit einem Takteingang des zweiten Registers (15), einem Takteingang des zweiten Zählers (19) und einem Rückwärtstakteingang des dritten Zählers (22) verbunden sind, ein Schalter (25), dessen Setzeingang mit einem Ausgang des Vergleichers (21) und dessen Ausgang mit einem Schreibtakteingang des ersten Speichers (14) und einem Vorwärtstakteingang des dritten Zählers (22) verbunden ist, dessen Überlaufausgang mit einem Rücksetzeingang des Schalters (25) verbunden ist, und ein erster Taktgenerator (26) vorgesehen sind, dessen Ausgang mit dem Takteingang des ersten Registers (13), mit dem Eingang der ersten Vielfachumschalter-Steuerung (17), mit einem Takteingang des ersten Zählers (18), mit einem Takteingang des ersten Phasenschiebers (23) und mit einem Eingang des Schalters (25) verbunden ist, und daß ferner als Empfänger-Pufferspeicher (6) ein viertes Register (27), dessen Eingänge als Eingänge des Empfänger-Pufferspeichers (6) dienen, ein zweiter Speicher (28), dessen Eingänge mit Ausgängen des vierten Registers (27) verbunden sind, ein fünftes Register (29), dessen Eingänge mit Ausgängen des zweiten Speichers (28) verbunden sind und dessen Ausgänge als Ausgänge des Empfänger-Pufferspeichers (6) dienen, ein zweiter Veilfachumschalter (30), dessen Ausgänge mit Adresseneingängen des zweiten Speichers (28) verbunden sind, eine zweite Vielfachumschalter-Steuerung (31), deren Ausgang mit dem Steuereingang des zweiten Vielfachumschalters (30) verbunden ist, ein vierter Zähler (32), dessen Rücksetzeingang als Bildimpulseingang dient und dessen Datenausgänge mit ersten Eingängen des zweiten Vielfachumschalters (30) verbunden sind, ein fünfter Zähler (33), dessen Datenausgänge mit zweiten Eingängen des zweiten Vielfachumschalters (30) verbunden sind, ein sechstes Register (34), dessen Dateneingänge mit den Datenausgängen des vierten Zählers (32) verbunden sind, ein zweiter Vergleicher (35), dessen erste Eingänge mit den Dateneingängen des sechsten Registers (34) und dessen zweite Eingänge mit den Datenausgängen des sechsten Registers (34) verbunden sind, ein sechster Zähler (36), dessen Überlaufausgang mit dem Takteingang des sechsten Registers (34) verbunden ist, ein zweiter Phasenschieber (37), dessen Eingang mit einem Ausgang eines vierten Taktgenerators (24') und dessen Ausgang mit einem Schreibtakteingang des zweiten Speichers (28), einem Takteingang des vierten Registers (27) dem Eingang des fünften Zählers (33) und einem Rückwärtstakteingang des sechsten Zählers (36) verbunden sind, ein zweiter Schalter (38), dessen Setzeingang mit einem Ausgang des zweiten Vergleichers (35), dessen Ausgang mit dem Lesetakteingang des zweiten Speichers (28) mit einem Bildspeicherausgang (39), mit einem Takteingang des fünften Schieberegisters (28) und mit dem Vorwärtstakteingang des sechsten Zählers (36) verbunden ist, dessen Überlaufausgang mit dem Rücksetzeingang des Schalters (38) verbunden ist, ein dritter Taktgenerator (26') vorgesehen sind, dessen Ausgang mit einem Eingang der zweiten Vielfachumschaltersteuerung (31), mit einem Takteingang des vierten Zählers (32), mit einem Takteingang des zweiten Phasenschiebers (37) und mit dem Eingang des zweiten Schalters (38) verbunden ist (Fig. 3 und 5).

2. System nach Anspruch 1, dadurch gekennzeichnet, daß ein siebtes Register (40) vorgesehen ist, das den Dateneingängen des sechsten Registers (34) vorgeschaltet ist und dessen Takteingang dem Überlaufausgang des sechsten Zählers (36) verbunden ist, daß erste Eingänge des zweiten Vergleichers (35) nur mit den Dateneingängen des siebten Registers (40) verbunden sind, daß der Takteingang des sechsten Registers (34) mit einem Rücksetzeingang (32') des vierten Zählers (32'') verbunden ist, daß ein siebter Zähler (41) vorgesehen ist, dessen Takteingang mit dem Ausgang des dritten Taktgenerators (26'), dessen Ausgang mit einem zweiten Rücksetzeingang (32') des vierten Zählers (32''), dessen einer Rücksetzeingang mit einem Ausgang für eine definierte Zahl des fünften Zählers (33') und dessen anderer Rücksetzeingang mit dem einen Rücksetzeingang (32') des vierten Zählers (32'') verbunden ist, daß ein dritter Schalter (42) vorgesehen ist, dessen Eingang mit dem Eingang des zweiten Schalters (38) und dem Ausgang des dritten Taktgenerators (26') verbunden ist, daß ein ODER-Gatter (43) vorgesehen ist, dessen einer Eingang und dessen Ausgang in die Verbindung zwischen dem zweiten Schalter (38) und dem sechsten Zähler (36) einerseits un dem Lesetakteingang des zweiten Speichers (28), das fünfte Register (29) und den Bildspeicherausgang (39) andererseits eingefügt sind und dessen anderer Eingang mit dem Ausgang des dritten Schalters (42) verbunden ist, daß ein dritter Umschalter (44) vorgesehen ist, dessen Eingang mit dem Ausgang des zweiten Vergleichers (35), dessen erster Ausgang mit dem Setzeingang des zweiten Schalters (38), dessen zweiter Ausgang mit dem Setzeingang des dritten Schalters (42), dessen Steuereingang für den ersten Ausgang mit dem Takteingang des sechsten Registers (34) und dessen Steuereingang für den zweiten Ausgang mit dem Ausgang des siebten Zählers (41) verbunden sind, und daß ein achter Zähler (45) vorgesehen ist, dessen Vorwärtstakteingang mit dem Ausgang des zweiten Schalters (38), dessen Rückwartstakteingang mit dem Ausgang des dritten Schalters (42) und dessen Überlaufausgang mit dem Rücksetzeingang des dritten Schalters (42) verbunden sind (Fig. 7).

3. System nach Anspruch 1 oder 2, dadurch gekennzeichnet, daß als erster (18) oder als vierter (32) Zähler ein Bildpunktzähler (46), dessen Takteingang als Eingang des ersten oder vierten Zählers (18, 32) und dessen Rücksetzeingang als Bildimpulseingang des ersten oder vierten Zählers (18, 32) dienen, ein Zeilenzähler (47), dessen Takteingang mit dem Überlaufausgang des Bildpunktzählers (46) und dessen Rücksetzeingang mit dem Rücksetzeingang des Bildpunktzählers (46) verbunden sind, ein erster Lesespeicher (48), dessen Dateneingänge und den Datenausgängen des Bildpunktzählers (46) verbunden sind, ein zweiter Lesespeicher (49), dessen Dateneingänge mit den Datenausgängen des Zeilenzählers (47) verbunden sind und ein UND-Gatter (50) vorgesehen sind, dessen erster Eingang mit dem Ausgang des ersten Lesespeichers (48), dessen zweiter Eingang mit dem Ausgang des zweiten Lesespeichers (49) und dessen dritter Eingang mit dem Takteingang des Bildpunktzählers (46) verbunden sind und dessen Ausgang als Ausgang des ersten oder vierten Zählers (18, 32) dient (Fig. 9).

4. System nach Anspruch 1, dadurch gekennzeichnet, daß dem ersten Analog - Digital - Umsetzer (2) eine Sender - Takt - anpassungsstufe (51) nachgeschaltet ist und daß dem zweiten Digital-Analog-Umsetzer (8) eine Empfänger-Taktanpassungsstufe (52) vorgeschaltet ist.

5. System nach einem der vorhergehenden Ansprüche für Pulscodemodulation, dadurch gekennzeichnet, daß dem, Sender-Bildwiederholspeicher (3) ein PCM-DPCM-Umsetzer (53) zum Umsetzen von Pulscodemodulation in Differenzpulscodemodulation vorgeschaltet ist, und daß dem Empfänger-Bildwiderholspeicher (7) ein DPCM-PCM-Umsetzer (54) nachgeschaltet ist.

6. System nach Anspruch 5, dadurch gekennzeichnet, daß dem Sender-Pufferspeicher (4) ein Wahrscheinlichkeitscodierer (55) nachgeschaltet ist und daß dem Empfänger-Pufferspeicher (6) ein Wahrscheinlichkeitsdecodierer (56) vorgeschaltet ist.

7. System nach einem der vorhergehenden Ansprüche, dadurch gekennzeichnet, daß dem Eingang des Übertragungskanals (5) ein Kanalcodierer (57) vorgeschaltet ist und daß dem Ausgang des Übertragungskanals (5) ein Kanalcodierer (58) nachgeschaltet ist.

**Claims**

1. A system for transmitting individual images which are either stationary or which move during recording, comprising a television camera (1); a first analogue-digital converter (2); a digital transmitter image repetition store (3) for the transmission of images which are not at least virtually stationary; a transmitter buffer store (4); either a digital transmission channel or an analogue transmission channel (5) which is limited by a first digital-analogue converter and a second analogue-digital converter; a digital receiver image repetition store (7); a receiver buffer store (6); a second digital-analogue converter (8); and a television receiver (9), characterised in that the transmitter image repetition store (7) and the receiver image repetition store consist of CCD (charge coupled device) image repetition stores, that the transmitter buffer store (4) consists of a first register (13) whose inputs are used as inputs of the transmitter buffer store (4), a first store (14) whose inputs are connected to the outputs of the first register (13), a second register (15) whose inputs are connected to the outputs of the first store (14) and whose outputs serve as outputs of the transmitter buffer store (4), a first multiple change-over switch (16) whose outputs are connected to address inputs of the first store (14), a first multiple change-over switch control (17) whose output is connected to a control input of the first multiple change-over switch (16), a first counter (18) whose resetting input serves as an image pulse input and whose data outputs are connected to first inputs of the first multiple change-over switch (16), a second counter (19) whose outputs are connected to second inputs of the first multiple change-over switch (16), a third register (20) whose inputs are connected to data outputs of the first counter (18), a comparator (21) whose first inputs are connected to the inputs of the third register (20) and whose second inputs are connected to the outputs of the third register (20) a third counter (22) whose over-flow output is connected to a clock pulse input of the third register (20), a first phase shift device (23) whose input is connected to the output of a second clock pulse generator (24) and whose output is connected to a read clock pulse input of the first store (14), to a clock pulse input of the second register (15), to a clock pulse input of the second counter (19), and to a backwards clock pulse input of the third counter (22), a switch (25) whose setting input is connected to an output of the comparator (21) and whose output is connected to a write clock pulse input of the first store (14) and to a forwards clock pulse input of the third counter (22) whose overflow output is connected to a resetting input of the switch (25), and a first clock pulse generator (26) whose output is connected to the clock pulse input of the first register (13), to the input of the first multiple change-over switch control (17), to a clock pulse input of the first counter (18), to a clock pulse input of the first phase shift device (23), and to an input of the switch (25), and that moreover the receiver buffer store (6) consists of a fourth register (27) whose inputs are used as inputs of the receiver buffer store (6), a second store (28) whose inputs are connected to outputs of the fourth register (27), a fifth register (29) whose inputs are connected to outputs of the second store (28) and whose outputs serve as outputs of the receiver buffer store (6), a second multiple change-over switch (30) whose outputs are connected to address inputs of the second store (28), a second multiple change-over switch control (31) whose output is connected to the control input of the second multiple change-over switch (30), a fourth counter (32) whose resetting input serves as an image pulse input and whose data outputs are connected to first inputs of the second multiple change-over switch (30), a fifth counter (33) whose data outputs are connected to second inputs of the second multiple change-over switch (30), a sixth register (34) whose data inputs are connected to the data outputs of the fourth counter (32), a second comparator (35) whose first inputs are connected to the data inputs of the sixth register (34) and whose second inputs are connected to the data outputs of the sixth register (34), a sixth counter (36) whose overflow output is connected to the clock pulse input of the sixth register (34), a second phase shift device (37) whose input is connected to an output of a fourth clock pulse generator (24') and whose output is connected to a write clock pulse input of the second store (28), to a clock pulse input of the fourth register (27), to the input of the fifth counter (33), and to a backwards clock pulse input of the sixth counter (36), a second switch (38) whose setting input is connected to an output of the second comparator (35), whose output is connected to the read clock pulse input of the second store (28), to an image store output (39), to a clock pulse input of the fifth register (29), and to the forwards clock pulse input of the sixth counter (36) whose overflow output is connected to the resetting input of the switch (38), and a third clock pulse generator (26') whose output is connected to an input of the second multiple change-over switch control (31), to a clock pulse input of the fourth counter (32), to a clock pulse input of the second phase shift device (37), and to the input of the second switch (38) (Figures 3 and 5).

2. A system as claimed in claim 1, characterised in that a seventh register (40) is provided which is connected preceding the data inputs of the sixth register (34) and whose clock pulse input is connected to the over-flow output of the sixth counter (36), that first inputs of the second comparator (35) are connected only to the data inputs of the seventh register (40), that the clock pulse input of the sixth register (34) is connected to the resetting input of the fourth counter (32'), that a seventh counter (41) is provided whose clock pulse input is connected to the output of the third clock pulse generator (26'), whose output is connected to a second resetting input of the fourth counter (32'), whose first resetting input is connected to an output for a determinate number of the fifth counter (33'), and whose other resetting input is connected to the first resetting input of the fourth counter (32'), that a third switch (42) is provided whose input is connected to the input of the second switch (38) and to the output of the third clock pulse generator (26'), that an OR-gate (43) is provided whose first input and whose output are linked into the connection from the second switch (38) to the sixth counter (36) on the one side, and to the read clock pulse input of the second store (28), to the fifth register (29) and to the image store output (39) on the other side, and whose other input is connected to the output of the third switch (42), that a third change-over switch (44) is provided whose input is connected to the output of the second comparator (35), whose first output is connected to the setting input of the second switch (38), whose second output is connected to the setting input of the third switch (42), whose control input for the first output is connected to the clock pulse input of the sixth register (34), and whose control input for the second output is connected to the output of the seventh counter (41), and that an eighth counter (45) is provided whose forwards clock pulse input is connected to the output of the second switch (38), whose backwards clock pulse input is connected to the output of the third switch (42), and whose overflow output is connected to the resetting input of the third switch (42) (Figure 7).

3. A system as claimed in claim 1 or 2, characterised in that the first (18) or fourth (32) counter consists of an image spot counter (46) whose clock pulse input serves as input of the first or fourth counter (18, 32) and whose resetting input serves as image pulse input of the first or fourth counter (18, 32), a row counter (47) whose clock pulse input is connected to the over-flow output of the image spot counter (46) and whose resetting input is connected to the resetting input of the image spot counter (46), a first read store (48) whose data inputs are connected to the data outputs of the image spot counter (46), a second read store (49) whose data inputs are connected to the data outputs of the row counter (47), and an AND-gate (50) whose first input is connected to the output of the first read store (48), whose second input is connected to the output of the second read store (49), whose third input is connected to the clock pulse input of the image spot store (46), and whose output serves as output of the first or fourth counter (18, 32) (Figure 9).

4. A system as claimed in claim 1, characterised in that the first analogue-digital converter (2) is followed by a transmitter clock pulse matching stage (51), and the second digital-analogue converter (8) is preceded by a receiver clock pulse matching stage (52).

5. A system as claimed in one of the preceding claims, for pulse code modulation, characterised in that the transmitter image repetition store (3) is preceded by a PCM-DPCM converter (53) which serves to convert pulse code modulation into difference pulse code modulation, and the receiver image repetition store (7) is followed by a DPCM-PCM converter (54).

6. A system as claimed in claim 5, characterised in that the transmitter buffer store (4) is followed by a probability coder (55), and the receiver buffer store (6) is preceded by a probability decoder (56).

7. A system as claimed in any one of the preceding claims, characterised in that the input of the transmission channel (5) is preceded by a channel coder (57), and the output of the transmission channel (5) is followed by a channel coder (58).

## Revendications

1. Système pour la transmission, à l'aide d'une caméra de télévision (1), d'images individuelles fixes ou d'images mobiles pendant la prise de vue, du type comportant un premier convertisseur analogique-numérique (2), une mémoire de réception d'image numérique d'émission (3) pour le cas de l'émission d'images au moins approximativement mobiles, une mémoire tampon d'émission (4), un canal de transmission (5) numérique ou analogique limité par un premier convertisseur numérique-analogique et par un second convertisseur analogique-numérique, une mémoire numérique de répétition d'image de réception (7), une mémoire tampon de réception (6), un second convertisseur numérique-analogique (8) et un téléviseur (9), caractérisé par le fait qu'au titre de mémoire de répétition d'image d'émission (17) et qu'au titre de mémoire de répétition d'image de réception, on prévoit des dispositifs de répétition d'image CCD (Charge-Coupled-Device), qu'au titre de mémoire tampon d'émission (4) on prévoit un premier registre (13) dont les entrées servent d'entrée pour la mémoire tampon d'émission (4), une première mémoire (14) dont les entrées sont reliées aux sorties du premier registre (13), un second registre (15) dont les entrées sont reliées aux sorties de la première mémoire (14) et dont les sorties servent de sorties pour la mémoire tampon d'émission (4), un premier commutateur multiple (16) dont les sorties sont reliées aux entrées d'adresse de la première mémoire (14), une première commande (17) du commutateur multiple, dont la sortie est reliée à l'entrée de commande du premier commutateur multiple (16), un premier compteur (18) dont l'entrée de remise à l'état initial sert d'entrée pour les impulsions d'image et dont les sorties de données sont reliées aux premières entrées du premier commutateur multiple (16), un second compteur (19) dont les sorties sont reliées à des secondes entrées du premier commutateur multiple (16), un troisième registre (20) dont les entrées sont reliées aux sorties de données du premier compteur (18), un comparateur (21) dont les premières entrées sont reliées aux entrées du troisième registre (20) et dont les secondes entrées sont reliées aux sorties du troisième registre (20), un troisième compteur (22) dont la sortie de dépassement de capacité est reliée à l'entrée de cadence du troisième registre (20), un premier déphaseur (23) dont l'entrée est reliée à la sortie d'un second générateur de cadence (24) et dont la sortie est reliée à une entrée de cadence de lecture de la première mémoire (14), à une entrée de cadence du second registre (15) à une entrée de cadence du second compteur (19) et à une entrée de cadence rétrograde du troisième compteur (22), un interrupteur (25) dont l'entrée de commande est reliée à une sortie du comparateur (21) et dont la sortie est reliée à une entrée de cadence d'écriture de la première mémoire (14) et à une entrée de cadence dans le sens progressif du troisième compteur (22), dont la sortie de dépassement de capacité est reliée à une entrée de remise à l'état initial de l'interrupteur (25), et un premier générateur de cadence (26) dont la sortie est reliée à l'entrée de cadence du premier registre (13), à l'entrée de la première commande (17) du commutateur multiple, à une entrée de cadence du premier compteur (18), à une entrée de cadence du premier déphaseur (23) et à une entrée de l'interrupteur (25), et qu'en outre il est prévu, en tant que mémoire tampon de réception (6) un quatrième registre (27) dont les entrées servent d'entrées pour la mémoire tampon de réception (6), une seconde mémoire (28) dont les entrées sont reliées aux entrées du quatrième registre (27), un cinquième registre (29) dont les entrées sont reliées aux sorties de la seconde mémoire (28) et dont les sorties servent de sorties de la mémoire tampon de réception (6), un second commutateur multiple (30) dont les sorties sont reliées aux entrées d'adresse de la seconde mémoire (28), une seconde commande (31) du commutateur multiple, dont la sortie est reliée à l'entrée de commande du second commutateur multiple (30), un quatrième compteur (32) dont l'entrée de remise à l'état initial sert d'entrée pour l'impulsion d'image et dont les sorties de données sont reliées à des premières entrées du second commutateur multiple (30), un cinquième compteur (33) dont les sorties de données sont reliées à des secondes entrées du second commutateur multiple (30), un sixième registre (34) dont les entrées de données sont reliées aux sorties de données du quatrième compteur (32), un second comparateur (35) dont les premières entrées sont reliées aux entrées de données du sixième registre (34) et dont les secondes entrées sont reliées aux sorties de données du sixième registre (34), un sixième compteur (36) dont la sortie de dépassement de capacité est reliée à l'entrée de cadence du sixième registre (34), un second déphaseur (37) dont l'entrée est reliée à la sortie d'un quatrième générateur de cadence (24') et dont la sortie est reliée à l'entrée de cadence d'écriture de la seconde mémoire (28), à une entrée de cadence du quatrième registre (27), à une entrée du cinquième compteur (33) et à une entrée de cadence rétrograde du sixième compteur (36), un second interrupteur (38) dont l'entrée de commande est reliée à une sortie du second comparateur (35), dont la sortie est reliée à l'entrée de cadence de lecture de la seconde mémoire (28), à une sortie de mémoire d'image (39), à une entrée de cadence du cinquième registre (29) et à l'entrée de cadence progressive du sixième compteur (36) dont la sortie de dépassement de capacité est reliée à l'entrée de remise à l'état initial de l'interrupteur (38), et un troisième générateur de cadence (26') dont la sortie est reliée à une entrée du second commutateur multiple (31), à une entrée de cadence du quatrième compteur (32), à une entrée de cadence du second déphaseur (37) et à l'entrée du second interrupteur (38) (Figures 3 et 5).

2. Système selon la revendication 1, caractérisé par le fait qu'il est prévu un septième registre (40) qui est monté en amont des entrées de données du sixième registre (34) et dont l'entrée de cadence est reliée à la sortie de dépassement de capacité du sixième compteur (36), que des premières entrées du second comparateur (35) ne sont reliées qu'à des entrées de données du septième registre (40), que l'entrée de cadence du sixième registre (34) est reliée à une entrée de remise à l'état initial du quatrième compteur (32'), qu'il est prévu un septième compteur (41) dont l'entrée de cadence est reliée à la sortie du troisième générateur de cadence (26') dont la sortie est reliée à une seconde entrée de remise à l'état initial du quatrième compteur (32') dont une entrée de remise à l'état initial est reliée à la sortie pour un nombre déterminé du cinquième compteur (33') et dont l'autre entrée de remise à l'état initial est reliée à l'entrée de remise à l'état initial du quatrième compteur (32'), qu'il est prévu un troisième interrupteur (42) dont l'entrée est reliée à l'entrée du second interrupteur (38) et à la sortie du troisième générateur de cadence (26'), qu'il est prévu un circuit OU (43) dont une entrée et dont la sortie sont insérées dans le liaison entre le second interrupteur (38) et le sixième compteur (36) d'une part et l'entrée de cadence de lecture de la seconde mémoire (28), le cinquième registre (29) et la sortie de la mémoire d'image (39), d'autre part, et dont l'autre entrée est reliée à la sortie du troisième interrupteur (42), qu'il est prévu un troisième commutateur (44) dont l'entrée est reliée à la sortie du second comparateur (35), dont la première sortie est reliée à l'entrée de commande du second interrupteur (38), dont la seconde sortie est reliée à l'entrée de commande du troisième interrupteur (42), dont l'entrée de commande pour la première sortie est reliée à l'entrée de cadence du sixième registre (34) et dont l'entrée de commande pour la seconde sortie est reliée à la sortie du septième compteur (41), et qu'il est prévu un huitième compteur (45) dont l'entrée de cadence dans le sens progressif est reliée à la sortie du second interrupteur (38), dont l'entrée de cadence rétrograde est reliée à la sortie du troisième interrupteur (42) et dont la sortie de dépassement de capacité est reliée à l'entrée de remise à l'état initial du troisième interrupteur (42) (Figure 7).

3. Système selon la revendication 1 ou 2, caractérisé par le fait qu'il est prévu au titre de premier compteur (18) ou de quatrième compteur (32) un compteur de points d'image (46) dont l'entrée de cadence sert d'entrée du premier ou du quatrième compteur (18, 32) et dont l'entrée de remise à l'état initial sert d'entrée d'impulsions d'image du premier ou quatrième compteurs (18, 32), un compteur de ligne (47) dont l'entrée de cadence est reliée à la sortie de dépassement de capacité du compteur de points d'image (46) et dont l'entrée de remise à l'état initial est reliée à l'entrée de remise à l'état initial du compteur de points d'image (46), une première mémoire de lecture (48) dont les entrées de données sont reliées aux sorties de données du compteur de points d'image (46), une seconde mémoire de lecture (49) dont les entrées de données sont reliées aux sorties de données du compteur de lignes (47) et un circuit ET (50) dont la première entrée est reliée à la sortie de la première mémoire de lecture (48), dont la seconde entrée est reliée à la sortie de la seconde mémoire de lecture (49) et dont la troisième entrée est reliée à l'entrée de cadence du compteur de points d'image (46) et dont la sortie sert de sortie du premier ou quatrième compteurs (18, 32) (Figure 9).

4. Système selon la revendication 1, caractérisé per la fait qu'en aval du premier convertisseur analogique-numérique (2) est monté un étage d'adaptation de cadence d'émission (51) et qu'en amont du second convertisseur numérique-analogique (8) est monté un étage d'adaptation de cadence de réception (52).

5. Système selon l'une des revendications antérieures pour la modulation par impulsions codées, caractérisé par le fait qu'en amont de la mémoire de répétition d'image d'émission (3) est prévu un convertisseur PCM-DPCM (53) pour convertir la modulation par impulsions codées en une modulation différentielle par impulsions codées, et qu'en aval de la mémoire de répétition d'image de réception (7) est monté un convertisseur DPCM-PCM (54).

6. Système selon la revendication 5, caractérisé par la fait qu'en aval de la mémoire tampon d'émission (4) est monté un codeur de probabilité (55) et qu'en amont de la mémoire tampon de réception (6) est monté un décodeur de probabilité (56).

7. Système selon l'une des revendications antérieures, caractérisé par la fait qu'en amont de l'entrée du canal de transmission (5) est prévu un codeur de canaux (57) et qu'en aval de la sortie du canal de transmission (5) est monté un codeur de canaux (58).

0 004 010

FIG 1

FIG 2

FIG 3

FIG 4

FIG 6

FIG 5

FIG 7

FIG 8

FIG 9

51 ▷

52 ▷

46   47   18, 32

9*   10*

48   49

&   50

FIG. 10

1   2   51   53   3   4   55   57   5a

A/D

5b

59

60

5c

9   8   52   54   7   6   56   58   5c

A/D

0 004 010